(19) Europäisches Patentamt / European Patent Office / Office européen des brevets

(11) **EP 3 577 469 B1**

(12) **EUROPÄISCHE PATENTSCHRIFT**

(45) Veröffentlichungstag und Bekanntmachung des Hinweises auf die Patenterteilung:
**01.06.2022 Patentblatt 2022/22**

(21) Anmeldenummer: **18714157.7**

(22) Anmeldetag: **13.03.2018**

(51) Internationale Patentklassifikation (IPC):
*G01P 21/00* (2006.01)    *G01P 15/00* (2006.01)
*B60L 3/10* (2006.01)    *B61L 25/02* (2006.01)

(52) Gemeinsame Patentklassifikation (CPC):
**G01P 21/00; B61L 25/021; B61L 25/026; G01P 15/00**

(86) Internationale Anmeldenummer:
**PCT/EP2018/056150**

(87) Internationale Veröffentlichungsnummer:
**WO 2018/177736 (04.10.2018 Gazette 2018/40)**

(54) **MESSANORDNUNG UND VERFAHREN ZUM ERZEUGEN EINES AUSGANGSMESSSIGNALS MIT ZUMINDEST EINEM BESCHLEUNIGUNGSSENSOR**

MEASUREMENT SYSTEM AND METHOD FOR PRODUCING AN OUTPUT MEASUREMENT SIGNAL, COMPRISING AT LEAST ONE ACCELERATION SENSOR

DISPOSITIF DE MESURE ET PROCÉDÉ DE GÉNÉRATION D'UN SIGNAL DE MESURE DE SORTIE AVEC AU MOINS UN CAPTEUR D'ACCÉLÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2017 DE 102017205312**

(43) Veröffentlichungstag der Anmeldung:
**11.12.2019 Patentblatt 2019/50**

(73) Patentinhaber: **Siemens Mobility GmbH**
**81739 München (DE)**

(72) Erfinder: **GIERKE, Hartmut**
**38259 Salzgitter (DE)**

(74) Vertreter: **Deffner, Rolf**
**Siemens Mobility GmbH**
**Postfach 22 16 34**
**80506 München (DE)**

(56) Entgegenhaltungen:
EP-A1- 2 660 121    DE-A1-102004 037 593
DE-A1-102009 045 305    DE-A1-102013 217 478
US-A1- 2011 066 397

**Beschreibung**

Die Erfindung bezieht sich auf eine Messanordnung für ein Fahrzeug mit zumindest einem Beschleunigungssensor. Bekanntermaßen können Fahrzeuge, insbesondere Schienenfahrzeuge, mit Beschleunigungssensoren ausgestattet werden, um die Fahrzeugbeschleunigung zu erfassen.

Messanordnungen des Standes der Technik sind z. B. aus DE 10 2013 217 478 A1, DE 10 2004 037 593 A1, EP 2 660 121 A1, US 2011/066397 A1 und DE 10 2009 045 305 A1 bekannt.

Der Erfindung liegt die Aufgabe zugrunde, eine verbesserte Messanordnung anzugeben.

Diese Aufgabe wird erfindungsgemäß durch eine Messanordnung mit den Merkmalen gemäß Patentanspruch 1 gelöst. Vorteilhafte Ausgestaltungen der erfindungsgemäßen Messanordnung sind in den abhängigen Ansprüchen angegeben.

Danach ist erfindungsgemäß vorgesehen, dass ein erster Beschleunigungssensor eines Sensorpaares an einem Fahrzeugrad befestigt ist und ein zweiter Beschleunigungssensor des Sensorpaares bezogen auf die Radachse diametral gegenüberliegend angeordnet an demselben Fahrzeugrad befestigt ist und eine Auswerteinrichtung mit den beiden Beschleunigungssensoren des Sensorpaares in Verbindung steht und mit den Sensorsignalen der beiden Beschleunigungssensoren ein Ausgangsmesssignal erzeugt.

Ein wesentlicher Vorteil der erfindungsgemäßen Messanordnung besteht darin, dass ein die Messung verfälschender Einfluss der Gravitationskraft - beispielsweise im Falle einer Streckenneigung - bei der Signalauswertung eliminiert oder herausgerechnet werden kann, weil die Beschleunigungssensoren einander diametral gegenüberliegen.

Die Messanordnung weist erfindungsgemäß außerdem einen Winkelsensor auf, der den Drehwinkel des Fahrzeugrades unter Bildung eines Drehwinkelwertes misst.

Die Auswerteinrichtung steht erfindungsgemäß mit dem Winkelsensor in Verbindung und ermittelt mit dem Drehwinkelwert und den Sensorsignalen der beiden Beschleunigungssensoren des Sensorpaares das Ausgangsmesssignal.

Vorzugsweise ist der Abstand der Beschleunigungssensoren von der Radachse gleich groß.

Mit Blick auf eine einfache Signalauswertung wird es als vorteilhaft angesehen, wenn die beiden Beschleunigungssensoren des Sensorpaares in einer analogen oder digitalen Brückenschaltung verschaltet sind, die als Brückensignal ein vorzeichenrichtig gebildetes Differenzsignal der Sensorsignale erzeugt. Die Auswerteinrichtung erzeugt das Ausgangsmesssignal bevorzugt unter Heranziehung des Brückensignals.

Besonders vorteilhaft ist es, wenn die beiden Beschleunigungssensoren des Sensorpaares jeweils ein erstes Sensorelement zur Erzeugung eines tangentialen Sensorsignals, das die jeweilige tangentiale Radbeschleunigung angibt, und ein zweites Sensorelement zur Erzeugung eines radialen Sensorsignals, das die jeweilige in Richtung Radmitte ausgerichtete Radbeschleunigung angibt, aufweisen und die Auswerteinrichtung das Ausgangsmesssignal unter Heranziehung der tangentialen und radialen Sensorsignale des Sensorpaares erzeugt.

Die Ausrichtung der ersten Sensorelemente der beiden Beschleunigungssensoren des Sensorpaares ist bei identischer Drehposition relativ zum Fahrzeugrad vorzugsweise identisch.

Auch ist es von Vorteil, wenn die beiden Beschleunigungssensoren des Sensorpaares in einer ersten Brückenschaltung verschaltet sind, die als erstes Brückensignal ein vorzeichenrichtig gebildetes Differenzsignal der tangentialen Sensorsignale erzeugt, die beiden Beschleunigungssensoren des Sensorpaares in einer zweiten Brückenschaltung verschaltet sind, die als zweites Brückensignal ein vorzeichenrichtig gebildetes Differenzsignal der radialen Sensorsignale erzeugt, und die Auswerteinrichtung das Ausgangsmesssignal unter Heranziehung der Brückensignale erzeugt.

Die Auswerteinrichtung ermittelt als Ausgangsmesssignal vorzugsweise einen Beschleunigungswert in Fahrzeuglängsrichtung.

Alternativ oder zusätzlich kann vorgesehen sein, dass die Auswerteinrichtung als Ausgangsmesssignal einen Neigungswert relativ zur Horizontalen ermittelt.

Auch kann - alternativ oder zusätzlich - vorgesehen sein, dass die Auswerteinrichtung als Ausgangsmesssignal einen Schlupfänderungswert und/oder einen Schlupfwert des Fahrzeugrades ermittelt.

Besonders vorteilhaft ist es, wenn die Messanordnung zusätzlich zu dem Sensorpaar ein oder mehr weitere Sensorpaare aufweist, die jeweils einen ersten an demselben Fahrzeugrad befestigten Beschleunigungssensor und einen zweiten bezogen auf die Radachse diametral gegenüberliegend angeordneten und an demselben Fahrzeugrad befestigten Beschleunigungssensor aufweisen, und die Auswerteinrichtung auch mit den Beschleunigungssensoren des oder der weiteren Sensorpaare in Verbindung steht und mit den Sensorsignalen aller Sensorpaare das Ausgangsmesssignal erzeugt.

Die Sensorpaare sind vorzugsweise drehsymmetrisch angeordnet.

Bei mehreren Sensorpaaren ist es außerdem vorteilhaft, wenn die beiden Beschleunigungssensoren eines jeden Sensorpaares jeweils in zumindest einer zugeordneten Brückenschaltung verschaltet sind, die als Brückensignal oder Brückensignale jeweils ein vorzeichenrichtig gebildetes Differenzsignal der Sensorsignale des jeweiligen Sensorpaares erzeugt, und die Auswerteinrichtung mit den Brückensignalen der Sensorpaare das Ausgangsmesssignal ermittelt.

Die Erfindung bezieht sich außerdem auf ein Fahrzeug, insbesondere Schienenfahrzeug, das mit einer Messanordnung, wie oben beschrieben, ausgestattet ist.

Die Erfindung bezieht sich darüber hinaus auf ein Verfahren zum Erzeugen eines Ausgangsmesssignals nach Anspruch 13 mit einer Messanordnung, die zumindest einen Beschleunigungssensor aufweist. Erfindungsgemäß ist bezüglich eines solchen Verfahrens vorgesehen, dass ein erster Beschleunigungssensor eines Sensorpaares an einem Fahrzeugrad befestigt ist und ein zweiter Beschleunigungssensor des Sensorpaares bezogen auf die Radachse diametral gegenüberliegend angeordnet an demselben Fahrzeugrad befestigt ist und mit den beiden Beschleunigungssensoren des Sensorpaares das Ausgangsmesssignal erzeugt wird.

Bezüglich der Vorteile des erfindungsgemäßen Verfahrens sei auf die obigen Ausführungen im Zusammenhang mit der erfindungsgemäßen Messanordnung verwiesen.

Die Erfindung wird nachfolgend anhand von Ausführungsbeispielen näher erläutert, dabei zeigen beispielhaft:

Fig. 1-4   ein erstes Ausführungsbeispiel für eine erfindungsgemäße Messanordnung, anhand derer beispielhaft mehrere Varianten für das erfindungsgemäße Verfahren bzw. mehrere Varianten für mögliche Betriebsverfahren der Messanordnung beschrieben werden, und

Figur 5    ein zweites Ausführungsbeispiel für eine erfindungsgemäße Messanordnung.

In den Figuren werden für vergleichbare oder identische Komponenten aus Gründen der Übersicht stets dieselben Bezugzeichen verwendet.

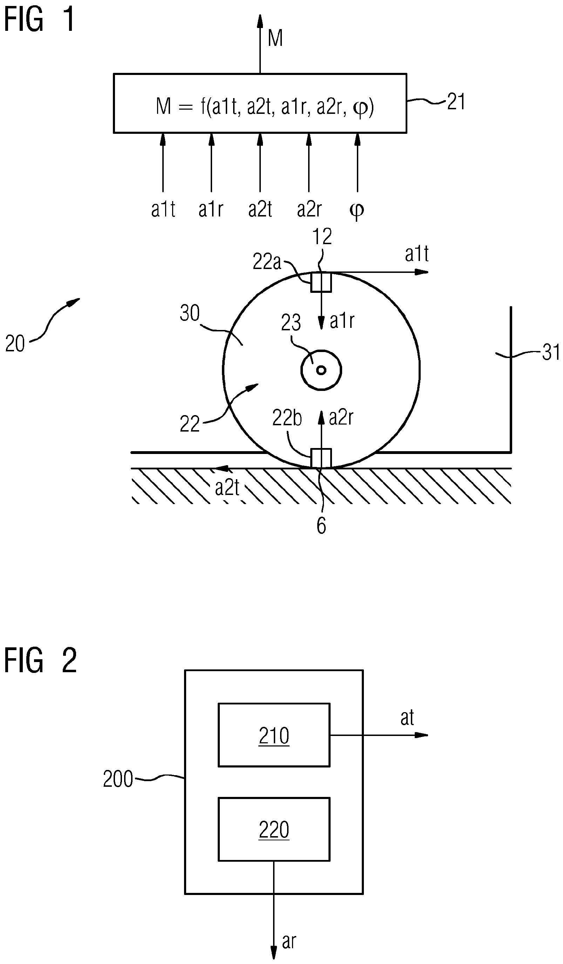

Figur 1 zeigt eine Messanordnung 20 mit einer Auswerteinrichtung 21, einem mit der Auswerteinrichtung 21 in Verbindung stehenden Sensorpaar 22 und einem Winkelmesser bzw. Winkelsensor 23. Die Verbindung zwischen dem Sensorpaar 22 und dem Winkelmesser 23 mit der Auswerteinrichtung 21 ist aus Gründen der Übersicht in der Figur 1 nicht weiter gezeigt, die Verbindung kann leitungsgebunden oder leitungsfrei (z. B. über Infrarot oder Funk) ausgestaltet sein.

Das Sensorpaar 22 ist an einem Fahrzeugrad 30 eines nicht weiter dargestellten Fahrzeugs 31 befestigt und weist einen ersten Beschleunigungssensor 22a und einen bezogen auf die Fahrzeugachse diametral gegenüberliegend angeordneten und an demselben Fahrzeugrad 30 befestigten zweiten Beschleunigungssensor 22b auf.

Die beiden Beschleunigungssensoren 22a und 22b sind vorzugsweise baugleich. In der Figur 2 ist ein Ausführungsbeispiel für einen Beschleunigungssensor näher im Detail gezeigt, der als jeder der beiden Beschleunigungssensoren 22a und 22b bei der Messanordnung 20 gemäß Figur 1 eingesetzt werden kann; der Beschleunigungssensor ist mit dem Bezugzeichen 200 gekennzeichnet.

Der Beschleunigungssensor 200 umfasst ein erstes Sensorelement 210 zur Erzeugung eines Sensorsignals at, das - bei der in der Figur 1 gezeigten Montage am Fahrzeugrad 30 - die jeweilige tangentiale Radbeschleunigung angibt, und ein zweites Sensorelement 220 zur Erzeugung eines radialen Sensorsignals ar, das die jeweilige in Richtung Radmitte ausgerichtete Radbeschleunigung angibt.

Bei der Darstellung gemäß Figur 1 sind die tangentialen Sensorsignale der beiden Beschleunigungssensoren mit den Bezugzeichen $a1t$ bzw. $a2t$ und die radialen Sensorsignale mit den Bezugzeichen $a1r$ und $a2r$ gekennzeichnet, wobei die Zahl "1" oder "2" in der Mitte angibt, ob das jeweilige Sensorsignal von dem ersten Beschleunigungssensor 22a oder dem zweiten Beschleunigungssensor 22b stammt.

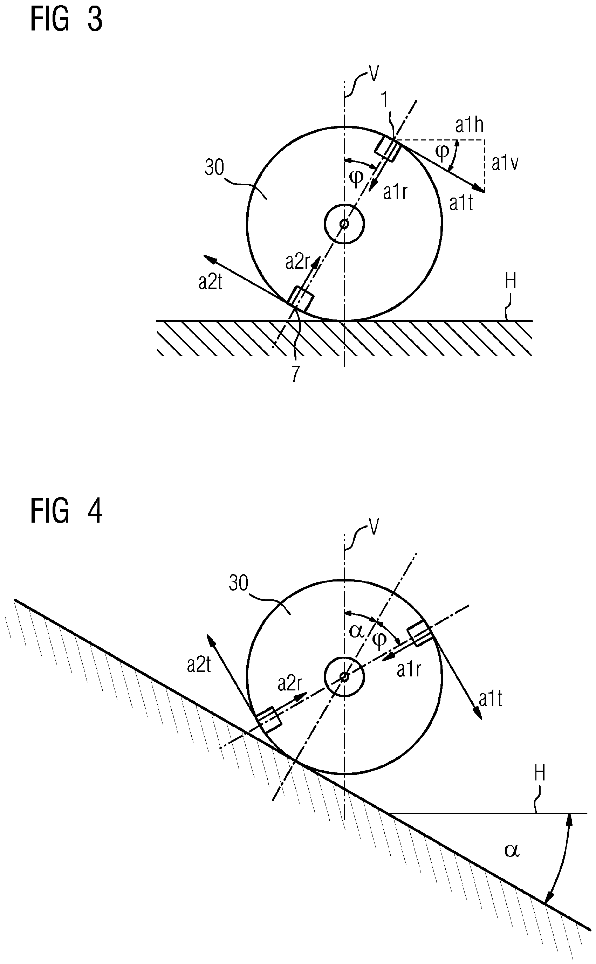

Der Winkelmesser 23 gibt den jeweiligen Drehwinkel φ (eingezeichnet zum Beispiel in Figur 3) des Fahrzeugrades 30 an.

Bei den in den Figuren gezeigten Ausführungsbeispielen wird beispielhaft davon ausgegangen, dass bei einem Drehwinkel φ von Null Grad (siehe Figur 1) der erste Beschleunigungssensor 22a auf der "12-Uhr" Position, gekennzeichnet mit dem Bezugzeichen 12 in Figur 1, und der zweite Beschleunigungssensor 22b auf der "6-Uhr" Position, gekennzeichnet mit dem Bezugzeichen 6 in Figur 1, steht. Diese Zuordnung ist willkürlich und nur beispielhaft zu verstehen, im Falle einer anderen Drehwinkelzuordnung kann eine Anpassung bei der Auswertung mathematisch in der Auswerteinrichtung 21 erfolgen.

Die Figur 3 zeigt das Fahrzeugrad 30 und die beiden Beschleunigungssensoren 22a und 22b, nachdem sich das Fahrzeugrad 30 um einen Drehwinkel φ von ca. 30 Grad im Uhrzeigersinn weitergedreht hat. Der erste Beschleunigungssensor 22a steht nun auf der "1-Uhr" Position, gekennzeichnet mit dem Bezugzeichen 1 in Figur 3, und der zweite Beschleunigungssensor 22b steht auf der "7-Uhr" Position, gekennzeichnet mit dem Bezugzeichen 7 in Figur 3. Es lässt sich erkennen, dass sich die Beträge der tangentialen und radialen Sensorsignale relativ zur Horizontalen H und Vertikalen V durch die Raddrehung verändern.

Die Auswerteinrichtung 22 wertet die eingangsseitig anliegenden tangentialen Sensorsignale $a1t$ bzw. $a2t$ und die radialen Sensorsignale $a1r$ und $a2r$ der beiden Beschleunigungssensoren 22a und 22b sowie den vom Winkelmesser 23 mittels eines Drehwinkelsignals übermittelten Drehwinkel φ aus und erzeugt ausgangsseitig ein Ausgangsmesssignal M als Funktion f dieser Signale:

$$M = f(a1t, a2t, a1r, a2r, \alpha)$$

Je nach Ausgestaltung der Auswerteinrichtung 21 kann das Ausgangsmesssignal M ein analoges Signal oder ein digitales Signal, beispielsweise ein binäres Signal, sein. Im Falle eines binären Signals M kann eine logische "Eins" des Signals beispielsweise anzeigen, dass ein vordefinierter Zustand (z. B. Fahrzeug wird beschleunigt) erkannt wurde, und eine logische "Null", dass der vordefinierte Zustand nicht erkannt wurde. Selbstverständlich kann die Zuordnung von logischer "Eins" und "Null" auch umgekehrt sein.

Die beiden Beschleunigungssensoren 22a und 22b des Sensorpaares 22 sind vorzugsweise in einer ersten analogen oder digitalen Brückenschaltung verschaltet, die als erstes Brückensignal ein vorzeichenrichtig gebildetes Differenzsignal Dt der tangentialen Sensorsignale erzeugt, gemäß:

$$Dt = a1t-a2t$$

Im Falle einer digitalen Brückenschaltung kann die erste Brückenschaltung beispielsweise durch einen Differenzbildner gebildet sein.

Die beiden Beschleunigungssensoren 22a und 22b des Sensorpaares 22 sind vorzugsweise außerdem in einer zweiten Brückenschaltung verschaltet, die als zweites Brückensignal ein vorzeichenrichtig gebildetes Differenzsignal Dr der radialen Sensorsignale erzeugt, gemäß:

$$Dr = a1r-a2r$$

Im Falle einer digitalen Brückenschaltung kann die zweite Brückenschaltung beispielsweise durch einen Differenzbildner gebildet sein.

Im Folgenden wird anhand von Beispielen näher erläutert, welche Ausgangsmesssignale M die Auswerteinrichtung 22 je nach deren Ausgestaltung erzeugen kann; die nachfolgenden Ausgestaltungen sind nur beispielhaft zu verstehen und stellen keine abschließende Auflistung aller möglichen Ausgangsmesssignale dar, die die Auswerteinrichtung 22 mit den Eingangssignalen bilden könnte:

1. Erkennen eines Stehens des Fahrzeugs:

Bei einer ersten möglichen Ausgestaltung der Auswerteinrichtung 21 erzeugt diese als Ausgangsmesssignal M eine logische "Eins", wenn die eingangsseitig anliegenden Signale auf einen Fahrzeugstillstand hindeuten. Vorzugsweise erzeugt die Auswerteinrichtung 21 die logische "Eins", wenn sich der Winkel $\varphi$ nicht ändert und die Differenzsignale Dt und Dr gleich Null oder zumindest kleiner als ein vorgegebener unterer Schwellenwert Dmin sind, wenn also gilt

$$\omega = d\varphi/dt = 0 = \text{oder zumindest } |d\varphi/dt| < \omega min$$

und

$$|Dt| < Dmin$$

und

$$|Dr| < Dmin$$

wobei $\omega min$ einen vorgegebenen unteren Schwellenwert für die Rotation des Fahrzeugrades 30 angibt.

In dem Fall, dass die obigen Bedingungen erfüllt sind, könnte theoretisch eine gleichförmige translatorische Bewegung des Fahrzeugs 31 bei blockiertem Fahrzeugrad 30 vorliegen, wenn beispielsweise das Fahrzeug 31 bei blockiertem Fahrzeugrad 30 abgeschleppt wird, jedoch ist diese Konstellation unwahrscheinlich. Sollte diese dennoch berücksichtigt werden, so würde das Ausgangsmesssignal M bei einer logischen "Eins" anzeigen, dass das Fahrzeugrad 30 sich nicht dreht und das Fahrzeug 31 eine unbeschleunigte Bewegung ausführt.

2. Erkennen einer Fahrzeugneigung bei geneigt stehendem Fahrzeug:

In der Figur 4 lässt sich erkennen, dass die Fahrzeugstillstandserkennung unter obigem Punkt 1 auch im Falle einer Streckenneigung $\alpha$ funktioniert, weil aufgrund der paarweisen Differenzbildung der Sensorsignale die Bedingungen

$$\omega = d\varphi/dt = = \text{oder zumindest } |d\varphi/dt| < \omega min$$

und

$$|Dt| < Dmin$$

und

$$|Dr| < Dmin$$

unabhängig von der Streckenneigung $\alpha$ erfüllt sind.

Abgesehen von dem Fahrzeugstillstand lässt sich wegen des Gegenüberliegens der Beschleunigungssensoren 22a und 22b die Streckenneigung $\alpha$ berechnen, weil der Drehwinkel $\varphi$ bekannt ist.

Bei horizontaler Strecke, also einer Streckenneigung $\alpha = 0$, gilt wie in Figur 3 gezeigt, beispielsweise:

$$a1v/a1h = \tan(\varphi)$$

oder

$$\varphi = \arctan(a1v/a1h)$$

Allgemein, also im Falle einer beliebigen Streckenneigung $\alpha$ gilt (siehe Darstellung in Figur 4):

$$\alpha = \arctan(a1v/a1h) - \varphi$$

Entsprechendes gilt für den zweiten Beschleunigungssensor 22b:

$$\alpha = \arctan(a2v/a2h) - \varphi$$

Mit den Sensorsignalen ist also eine Ermittlung der jweiligen Streckenneigung $\alpha$ möglich; dies gilt auch bei Fahrt des Fahrzeugs 31.

3. Erkennen einer Fahrzeugbeschleunigung bzw. einer Beschleunigung der Fahrzeugachse:

Anhand der Figuren 1, 3 und 4 lässt sich erkennen, dass die Auswerteinrichtung 20 anhand der tangentialen und radialen Sensorsignale auch die Beschleunigung in horizontaler und vertikaler Richtung ermitteln kann (siehe Bezugszeichen a1h und a1v in Figur 3), nämlich sowohl anhand der jeweiligen tangentialen Sensorsignale als auch anhand der radialen Sensorsignale. Dies soll beispielhaft anhand der Figur 3 und der tangentialen Sensorsignale verdeutlicht werden:

$$a1h = a1t * \cos(\varphi)$$

$$a2h = a2t * \cos(\varphi)$$

wobei a1h die horizontale Beschleunigung des jeweiligen Beschleunigungssensors angibt.

Es kann somit die Beschleunigung Dh des Fahrzeugs 31 in horizontaler Richtung ermittelt werden gemäß:

$$Dh = a1h - a2h = (a1t-a2t) * \cos(\varphi)$$

Für die radialen Sensorsignale gelten die Beziehungen entsprechend:

$$Dh = a1h - a2h = (a1r-a2r) * \sin(\varphi)$$

Es ist möglich, sensorspezifische Messfehler im Verlaufe einer Radumdrehung ebenfalls durch dieses Verfahren zu eliminieren, da diese bei einer Radumdrehung immer auf der gegenüberliegenden Position bei einer Radumdrehung auch gleichermaßen gegensinnig wirken.

4. Erkennen eines Schlupfes des Fahrzeugrades 30:

Im schlupffreien Fall entspricht die Beschleunigung Dh des Fahrzeugs 31 in horizontaler Richtung der Änderung des Rotationsgeschwindigkeit ω des Fahrzeugrads 30. Wird jedoch festgestellt, dass gilt:

$$Dh \neq \pi * Drad * d\omega/dt$$

wobei Drad den Raddurchmesser angibt, oder dass die Abweichung zwischen den beiden Seiten der Gleichung einen vorgegebenen Schwellenwert überschreitet, so kann die Auswerteinrichtung 20 ein Ausgangsmesssignal M erzeugen, das das Vorliegen einer Veränderung des Schlupfzustandes des Rades anzeigt.

Alternativ oder zusätzlich kann die Auswerteinrichtung 20 ein Ausgangsmesssignal M erzeugen, das eine Veränderung des Schlupfzustandes quantitativ angibt, beispielsweise gemäß:

$$\Delta SS = |(Dh - \pi*Drad*d\omega/dt) / (\pi*Drad*d\omega/dt)|$$

wobei ∆SS eine quantitative Schlupfänderungsmessgröße ist.

5. Quantifizierung eines Schlupfes des Fahrzeugrads 30:

Eine quantitative Schlupfgröße SS lässt sich mit der quantitativen Schlupfänderungmessgröße ∆SS durch Integration über der Zeit t ermitteln.

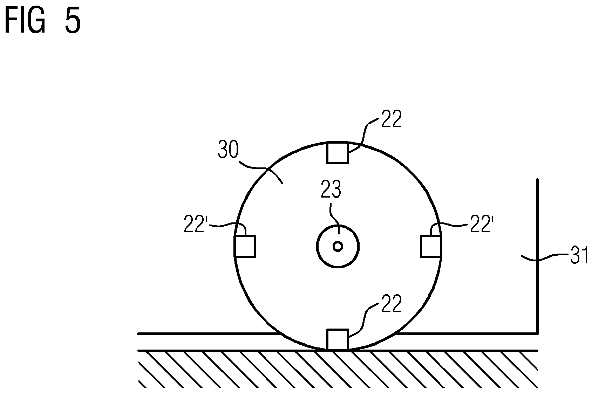

Die Figur 5 zeigt beispielhaft, dass das Fahrzeugrad 30 mit mehr als einem Sensorpaar 22 ausgestattet sein kann, beispielsweise mit einem weiteren Sensorpaar 22', wie in Figur 5 gezeigt. Die Sensorpaare sind vorzugsweise drehsymmetrisch angeordnet.

Je mehr Sensorpaare an die Auswerteinrichtung 21 angeschlossen sind bzw. je mehr Sensorsignale zur Verfügung stehen, umso genauer und zuverlässiger kann das Ausgangsmesssignal M bestimmt werden, weil beispielsweise durch Mittelung der Einfluss von Messfehlern in einzelnen Messsignalen reduziert werden kann.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Messanordnung (20) für ein Fahrzeug (31) mit zumindest einem Beschleunigungssensor (22a, 22b), wobei

   - ein erster Beschleunigungssensor (22a) eines Sensorpaares (22) an einem Fahrzeugrad (30) befestigbar ist und ein zweiter Beschleunigungssensor (22b) des Sensorpaares (22) bezogen auf die Radachse diametral gegenüberliegend angeordnet an demselben Fahrzeugrad (30) befestigbar ist,
   - eine Auswerteinrichtung (21) mit den beiden Beschleunigungssensoren (22a, 22b) des Sensorpaares (22) in Verbindung steht und so eingerichtet ist, dass sie mit den Sensorsignalen (alt, a1r, a2t, a2r) der beiden Beschleunigungssensoren (22a, 22b) ein Ausgangsmesssignal (M) erzeugt,
   **dadurch gekennzeichnet, dass**
   - die Messanordnung (20) einen Winkelsensor (23) aufweist, der so eingerichtet ist, dass er den Drehwinkel ($\varphi$) des Fahrzeugrads (30) unter Bildung eines Drehwinkelwertes misst, und
   - die Auswerteinrichtung (21) mit dem Winkelsensor (23) in Verbindung steht und so eingerichtet ist, dass sie mit dem Drehwinkelwert , dem Raddurchmesser (Drad) des Fahrzeugrads (30) und den Sensorsignalen (alt, a1r, a2t, a2r) der beiden Beschleunigungssensoren (22a, 22b) des Sensorpaares (22) das Ausgangsmesssignal (M) ermittelt, wobei die Auswerteinrichtung (21) weiterhin so eingerichtet ist, dass sie als Ausgangsmesssignal (M) einen Schlupfänderungswert und/oder einen Schlupfwert des Fahrzeugrads (30) ermittelt.

2. Messanordnung (20) nach Anspruch 1,
   **dadurch gekennzeichnet, dass** der Abstand der Beschleunigungssensoren (22a, 22b) von der Radachse gleich ist.

3. Messanordnung (20) nach einem der voranstehenden Ansprüche,
   **dadurch gekennzeichnet, dass**

   - die beiden Beschleunigungssensoren (22a, 22b) des Sensorpaares (22) in einer analogen oder digitalen Brückenschaltung verschaltet sind, die als Brückensignal ein vorzeichenrichtig gebildetes Differenzsignal der Sensorsignale (alt, a1r, a2t, a2r) erzeugt, und
   - die Auswerteinrichtung (21) das Ausgangsmesssignal (M) unter Heranziehung des Brückensignals erzeugt.

4. Messanordnung (20) nach einem der voranstehenden Ansprüche,
   **dadurch gekennzeichnet, dass**

   - die beiden Beschleunigungssensoren (22a, 22b) des Sensorpaares (22) jeweils ein erstes Sensorelement zur Erzeugung eines tangentialen Sensorsignals, das die jeweilige tangentiale Radbeschleunigung angibt, und ein zweites Sensorelement zur Erzeugung eines radialen Sensorsignals, das die jeweilige in Richtung Radmitte ausgerichtete Radbeschleunigung angibt, aufweisen und
   - die Auswerteinrichtung (21) das Ausgangsmesssignal (M) unter Heranziehung der tangentialen und radialen Sensorsignale (alt, a1r, a2t, a2r) des Sensorpaares (22) erzeugt.

5. Messanordnung (20) nach Anspruch 4,
   **dadurch gekennzeichnet, dass** die Ausrichtung der ersten Sensorelemente der beiden Beschleunigungssensoren (22a, 22b) des Sensorpaares (22) bei identischer Drehposition relativ zum Fahrzeugrad (30) identisch ist.

6. Messanordnung (20) nach Anspruch 4 oder 5,
   **dadurch gekennzeichnet, dass**

   - die beiden Beschleunigungssensoren (22a, 22b) des Sensorpaares (22) in einer ersten Brückenschaltung verschaltet sind, die als erstes Brückensignal ein vorzeichenrichtig gebildetes Differenzsignal der tangentialen Sensorsignale (alt, a2t) erzeugt,
   - die beiden Beschleunigungssensoren (22a, 22b) des Sensorpaares (22) in einer zweiten Brückenschaltung verschaltet sind, die als zweites Brückensignal ein vorzeichenrichtig gebildetes Differenzsignal der radialen Sensorsignale (a1r, a2r) erzeugt, und
   - die Auswerteinrichtung (21) das Ausgangsmesssignal (M) unter Heranziehung der Brückensignale erzeugt.

7. Messanordnung (20) nach einem der voranstehenden Ansprüche,
   **dadurch gekennzeichnet, dass** die Auswerteinrichtung (21) als Ausgangsmesssignal (M) einen Beschleunigungswert in Fahrzeuglängsrichtung ermittelt.

**8.** Messanordnung (20) nach einem der voranstehenden Ansprüche,
**dadurch gekennzeichnet, dass** die Auswerteinrichtung (21) als Ausgangsmesssignal (M) einen Neigungswert relativ zur Horizontalen (H) ermittelt.

**9.** Messanordnung (20) nach einem der voranstehenden Ansprüche,
**dadurch gekennzeichnet, dass**

- die Messanordnung (20) zusätzlich zu dem Sensorpaar (22) ein oder mehr weitere Sensorpaare (22') aufweist, die jeweils einen ersten an demselben Fahrzeugrad (30) befestigten Beschleunigungssensor (22a) und einen zweiten bezogen auf die Radachse diametral gegenüberliegend angeordneten und an demselben Fahrzeugrad (30) befestigten Beschleunigungssensor (22b) aufweisen, und
- die Auswerteinrichtung (21) auch mit den Beschleunigungssensoren (22a, 22b) des oder der weiteren Sensorpaare in Verbindung steht und mit den Sensorsignalen (alt, a1r, a2t, a2r) aller Sensorpaare das Ausgangsmesssignal (M) erzeugt.

**10.** Messanordnung (20) nach Anspruch 9,
**dadurch gekennzeichnet, dass** die Sensorpaare (22, 22') drehsymmetrisch angeordnet sind.

**11.** Messanordnung (20) nach einem der voranstehenden Ansprüche 9 bis 10,
**dadurch gekennzeichnet, dass**

- die beiden Beschleunigungssensoren (22a, 22b) eines jeden Sensorpaares (22, 22') jeweils in zumindest einer zugeordneten Brückenschaltung verschaltet sind, die als Brückensignal oder Brückensignale jeweils ein vorzeichenrichtig gebildetes Differenzsignal der Sensorsignale (alt, a1r, a2t, a2r) des jeweiligen Sensorpaares (22, 22') erzeugt, und
- die Auswerteinrichtung (21) mit den Brückensignalen der Sensorpaare (22, 22') das Ausgangsmesssignal (M) ermittelt.

**12.** Fahrzeug (31), insbesondere Schienenfahrzeug,
**dadurch gekennzeichnet, dass** dieses mit einer Messanordnung (20) nach einem der voranstehenden Ansprüche ausgestattet ist.

**13.** Verfahren zum Erzeugen eines Ausgangsmesssignals (M) mit einer Messanordnung (20), die zumindest einen Beschleunigungssensor (22a, 22b) aufweist, wobei ein erster Beschleunigungssensor (22a) eines Sensorpaares (22) an einem Fahrzeugrad (30) befestigt ist und ein zweiter Beschleunigungssensor (22b) des Sensorpaares (22) bezogen auf die Radachse diametral gegenüberliegend angeordnet an demselben Fahrzeugrad (30) befestigt ist,
**dadurch gekennzeichnet, dass**

- mit einem Winkelsensor (23) ein Drehwinkel (φ) des Fahrzeugrades (30) unter Bildung eines Drehwinkelwertes gemessen wird,
- mit den beiden Beschleunigungssensoren (22a, 22b) des Sensorpaares (22), dem Raddurchmesser (Drad) des Fahrzeugrads (30) und dem Winkelsensor (23) das Ausgangsmesssignal (M) erzeugt wird,
- wobei das Ausgangsmesssignal (M) das Vorliegen einer Veränderung eines Schlupfzustandes und/oder eine Veränderung des Schlupfzustandes quantitativ angibt.

## Claims

**1.** Measurement arrangement (20) for a vehicle (31) comprising at least one acceleration sensor (22a, 22b), wherein

- a first acceleration sensor (22a) of a sensor pair (22) can be fastened to a vehicle wheel (30) and a second acceleration sensor (22b) of the sensor pair (22) can be fastened to the same vehicle wheel (30) diametrically opposite with respect to the wheel axle,
- an evaluation device (21) is connected to the two acceleration sensors (22a, 22b) of the sensor pair (22) and is configured such that it generates an output measurement signal (M) using the sensor signals (alt, a1r, a2t, a2r) from the two acceleration sensors (22a, 22b),
**characterised in that**
- the measurement arrangement (20) has an angle sensor (23) which is configured such that it measures the

angle of rotation ($\varphi$) of the vehicle wheel (30) to form an angle of rotation value, and
- the evaluation device (21) is connected to the angle sensor (23) and is configured such that it determines the output measurement signal (M) using the angle of rotation value, the wheel diameter (Drad) of the vehicle wheel (30) and the sensor signals (alt, a1r, a2t, a2r) from the two acceleration sensors (22a, 22b) of the sensor pair (22), wherein the evaluation device (21) is furthermore configured such that it determines a slip change value and/or a slip value of the vehicle wheel (30) as the output measurement signal (M).

2. Measurement arrangement (20) according to claim 1,
   **characterised in that**
   the distance of the acceleration sensors (22a, 22b) from the wheel axle is the same.

3. Measurement arrangement (20) according to one of the preceding claims,
   **characterised in that**

   - the two acceleration sensors (22a, 22b) of the sensor pair (22) are connected in an analogue or digital bridge circuit which generates a differential signal of the sensor signals (alt, a1r, a2t, a2r) formed with the correct sign as a bridge signal, and
   - the evaluation device (21) generates the output measurement signal (M) using the bridge signal.

4. Measurement arrangement (20) according to one of the preceding claims,
   **characterised in that**

   - the two acceleration sensors (22a, 22b) of the sensor pair (22) each have a first sensor element for generating a tangential sensor signal which indicates the respective tangential wheel acceleration, and a second sensor element for generating a radial sensor signal which indicates the respective wheel acceleration aligned in the direction of the wheel centre, and
   - the evaluation device (21) generates the output measurement signal (M) using the tangential and radial sensor signals (alt, a1r, a2t, a2r) of the sensor pair (22) .

5. Measurement arrangement (20) according to claim 4,
   **characterised in that**
   the alignment of the first sensor elements of the two acceleration sensors (22a, 22b) of the sensor pair (22) is identical in the case of an identical rotational position relative to the vehicle wheel (30).

6. Measurement arrangement (20) according to claim 4 or 5,
   **characterised in that**

   - the two acceleration sensors (22a, 22b) of the sensor pair (22) are connected in a first bridge circuit which generates the differential signal of the tangential sensor signals (alt, a2t) formed with the correct sign as a first bridge signal,
   - the two acceleration sensors (22a, 22b) of the sensor pair (22) are connected in a second bridge circuit which generates a differential signal of the radial sensor signals (a1r, a2r) formed with the correct sign as a second bridge signal, and
   - the evaluation device (21) generates the output measurement signal (M) using the bridge signals.

7. Measurement arrangement (20) according to one of the preceding claims,
   **characterised in that**
   the evaluation device (21) determines an acceleration value in the longitudinal direction of the vehicle as the output measurement signal (M).

8. Measurement arrangement (20) according to one of the preceding claims,
   **characterised in that**
   the evaluation device (21) determines an incline value relative to the horizontal (H) as the output measurement signal (M).

9. Measurement arrangement (20) according to one of the preceding claims,
   **characterised in that**

- in addition to the sensor pair (22), the measurement arrangement (20) has one or more further sensor pairs (22') each of which has a first acceleration sensor (22a) fastened to the same vehicle wheel (30) and a second acceleration sensor (22b) diametrically opposite with respect to the wheel axle and fastened to the same vehicle wheel (30), and

- the evaluation device (21) is also connected to the acceleration sensors (22a, 22b) of the additional sensor pair or the additional sensor pairs and generates the output measurement signal (M) of all the sensor pairs using the sensor signals (alt, a1r, a2t, a2r).

10. Measurement arrangement (20) according to claim 9,
**characterised in that**
the sensor pairs (22, 22') are arranged in a rotationally symmetrical manner.

11. Measurement arrangement (20) according to one of the preceding claims 9 to 10,
**characterised in that**

- the two acceleration sensors (22a, 22b) of each sensor pair (22, 22') are in each case connected in at least one associated bridge circuit which in each case generates a differential signal formed with the correct sign of the sensor signals (alt, a1r, a2t, a2r) of the respective sensor pair (22, 22') as a bridge signal or bridge signals, and
- the evaluation device (21) determines the output measurement signal (M) using the bridge signals of the sensor pairs (22, 22').

12. Vehicle (31), in particular a rail vehicle,
**characterised in that**
this is equipped with a measurement arrangement (20) according to one of the preceding claims.

13. Method for producing an output measurement signal (M) comprising a measurement arrangement (20) which has at least one acceleration sensor (22a, 22b), wherein a first acceleration sensor (22a) of a sensor pair (22) is fastened to a vehicle wheel (30) and a second acceleration sensor (22b) of the sensor pair (22) is fastened to the same vehicle wheel (30) diametrically opposite with respect to the wheel axle,
**characterised in that**

- an angle of rotation ($\varphi$) of the vehicle wheel (30) is measured using an angle sensor (23) to form an angle of rotation value,
- the output measurement signal (M) is generated using the two acceleration sensors (22a, 22b) of the sensor pair (22), the wheel diameter (Drad) of the vehicle wheel (30) and the angle sensor (23),
- wherein the output measurement signal (M) quantitatively indicates the presence of a change in a slip state and/or a change in the slip state.

**Revendications**

1. Agencement (20) de mesure pour un véhicule (31) comprenant au moins un capteur (22a, 22b) d'accélération, dans lequel

- un premier capteur (22a) d'accélération d'une paire (22) de capteurs peut être fixé à une roue (30) du véhicule et un deuxième capteur (22b) d'accélération de la paire (22) de capteurs peut être fixé à la même roue (30) du véhicule, en étant disposé de manière diamétralement opposée par rapport à l'axe de la roue,
- un dispositif (21) d'analyse est en liaison avec les deux capteurs (22a, 22b) d'accélération de la paire (22) de capteurs et est conçu de manière à produire, avec les signaux (a1t, a1r, a2t, a2r) de capteur des deux capteurs (22a, 22b) d'accélération, un signal (M) de mesure de sortie, **caractérisé en ce que**
- l'agencement (20) de mesure a un capteur (23) d'angle, qui est conçu de manière à mesurer l'angle ($\varphi$) de rotation de la roue (30) du véhicule en formant une valeur d'angle de rotation, et
- le dispositif (21) d'analyse est en liaison avec le capteur (23) d'angle et est conçu de manière à déterminer, avec la valeur d'angle de rotation, le diamètre (Drad) de la roue (30) du véhicule et les signaux (a1t, a1r, a2t, a2r) de capteur des deux capteurs (22a, 22b) d'accélération de la paire (22) de capteurs, le signal (M) de mesure de sortie, le dispositif (21) d'analyse étant en outre conçu de manière à déterminer, comme signal (M) de mesure de sortie, une valeur de la variation du glissement et/ou une valeur de glissement de la roue (30) du véhicule.

**2.** Agencement (20) de mesure suivant la revendication 1, **caractérisé en ce que**
la distance des capteurs (22a, 22b) d'accélération à l'axe de la roue est la même.

**3.** Agencement (20) de mesure suivant l'une des revendications précédentes,
**caractérisé en ce que**

- les deux capteurs (22a, 22b) d'accélération de la paire (22) de capteurs sont montés en un circuit en pont analogique numérique, qui produit, comme signal du pont, un signal de différence, juste en signe, des signaux (a1t, a1r, a2t, a2r) des capteurs, et
- le dispositif (21) d'analyse produit le signal (M) de mesure de sortie en tirant parti du signal du pont.

**4.** Agencement (20) de mesure suivant l'une des revendications précédentes,
**caractérisé en ce que**

- les deux capteurs (22a, 22b) d'accélération de la paire (22) de capteurs ont chacun un premier élément de capteur de production d'un signal de capteur tangentiel, qui indique l'accélération tangentielle respective de la roue, et un deuxième élément de capteur de production d'un signal de capteur radial, qui indique l'accélération respective de la roue, dirigée en direction du milieu de la roue et
- le dispositif (21) d'analyse produit le signal (M) de mesure de sortie en tirant parti des signaux (a1t, a1r, a2t, a2r) de capteur tangentiels et radiaux de la paire (22) de capteurs.

**5.** Agencement (20) de mesure suivant la revendication 4, **caractérisé en ce que**
l'orientation des premiers éléments de capteur des deux capteurs (22a, 22b) d'accélération de la paire (22) de capteurs est la même pour une même position en rotation par rapport à la roue (30) du véhicule.

**6.** Agencement (20) de mesure suivant la revendication 4 ou 5, **caractérisé en ce que**

- les deux capteurs (22a, 22b) d'accélération de la paire (22) de capteurs sont montés suivant un premier circuit en pont, qui produit, comme premier signal du pont, un signal de différence, juste en signe, des signaux (a1t, a2t) de capteur tangentiels,
- les deux capteurs (22a, 22b) d'accélération de la paire (22) de capteurs sont montés suivant un deuxième circuit en pont, qui produit, comme deuxième signal du pont, un signal de différence, juste en signe, des signaux (a1r, a2r) de capteur radiaux, et
- le dispositif (21) d'analyse produit le signal (M) de mesure de sortie en tirant parti des signaux du pont.

**7.** Agencement (20) de mesure suivant l'une des revendications précédentes,
**caractérisé en ce que**
le dispositif (21) d'analyse détermine, comme signal (M) de mesure de sortie, une valeur d'accélération dans la direction longitudinale du véhicule.

**8.** Agencement (20) de mesure suivant l'une des revendications précédentes,
**caractérisé en ce que** le dispositif (21) d'analyse détermine, comme signal (M) de mesure de sortie, une valeur d'inclinaison par rapport à l'horizontale (H).

**9.** Agencement (20) de mesure suivant l'une des revendications précédentes,
**caractérisé en ce que**

- le dispositif (20) de mesure a, en plus de la paire (22) de capteurs, une ou plusieurs autres paires (22') de capteurs, qui ont chacune un premier capteur (22a) d'accélération, pouvant être fixé à la même roue (30) du véhicule, et un deuxième capteur (22b) d'accélération, disposé de manière diamétralement opposé par rapport à l'axe de la roue et fixé à la même roue (30) du véhicule, et
- le dispositif (21) d'analyse est en liaison également avec les capteurs (22a, 22b) d'accélération de la ou des autres paires de capteurs et produit le signal (M) de mesure de sortie avec les signaux (a1t, a1r, a2t, a2r) de capteur de toutes les paires de capteurs.

**10.** Agencement (20) de mesure suivant la revendication 9, **caractérisé en ce que**
les paires (22, 22') de capteurs sont disposées à symétrie de rotation.

**11.** Agencement (20) de mesure suivant l'une des revendications 9 à 10 précédentes, **caractérisé en ce que**

- les deux capteurs (22a, 22b) d'accélération de chaque paire (22, 22') de capteurs sont montés respectivement dans au moins un circuit de pont associé, qui produit, comme signal du pont, respectivement un signal de différence, juste en signe, des signaux (a1t, a1r, a2t, a2r) de capteurs de la paire (22, 22') de capteurs respective, et
- le dispositif (21) d'analyse détermine le signal (M) de mesure de sortie avec les signaux du pont des paires (22, 22') de capteurs.

**12.** Véhicule (31), notamment véhicule ferroviaire, **caractérisé en ce que**
celui-ci est équipé d'un agencement (20) de mesure suivant l'une des revendications précédentes.

**13.** Procédé de production d'un signal (M) de mesure de sortie par un agencement (20) de mesure, qui a au moins un capteur (22a, 22b) d'accélération, dans lequel un premier capteur (22a) d'accélération d'une paire (22) de capteurs est fixé à une roue (30) d'un véhicule, et un deuxième capteur (22b) d'accélération de la paire (22) de capteurs est fixé à la même roue (30) du véhicule, en étant disposé de manière diamétralement opposée par rapport à l'axe de la roue, **caractérisé en ce que**

- on mesure, par un capteur (23) d'angle, un angle ($\varphi$) de rotation de la roue (30) du véhicule en formant une valeur d'angle de rotation,
- on produit le signal (M) de mesure de sortie par les deux capteurs (22a, 22b) d'accélération de la paire (22) de capteurs, par le diamètre (Drad) de la roue (30) du véhicule et par le capteur (23) d'angle,
- dans lequel le signal (M) de mesure de sortie indique quantitativement la présence d'une variation d'un état de glissement et/ou une variation de l'état de glissement.

# FIG 1

$$M = f(a1t, a2t, a1r, a2r, \varphi)$$

# FIG 2

FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013217478 A1
- DE 102004037593 A1
- EP 2660121 A1
- US 2011066397 A1
- DE 102009045305 A1